# EUROPEAN PATENT SPECIFICATION

(11) **EP 3 742 137 B1**
(45) Date of publication and mention of the grant of the patent: **30.06.2021**
(21) Application number: 19176523.9
(22) Date of filing: 24.05.2019
(51) Int. Cl.: G01J 5/42, G01N 21/37, G01N 21/3504, G01N 29/24, G01J 5/04, G01N 21/17

(54) **PHOTOACOUSTIC SENSITIVE MODULE**
PHOTOAKUSTISCHES EMPFINDLICHES MODUL
MODULE PHOTOACOUSTIQUE SENSIBLE

(43) Date of publication of application: 25.11.2020
(73) Proprietor: Infineon Technologies AG, 85579 Neubiberg (DE)
(72) Inventor: Westmarland, Paul, Byfleet, Surrey KT14 7DB (GB); Maier, Dominic, 92714 Pleystein (DE)
(74) Representative: Stöckeler, Ferdinand

(56) References cited:
- US-A- 4 903 248
- US-A1- 2015 101 395
- US-A1- 2016 282 259
- US-B1- 6 222 190
- SCHJOLBERG-HENRIKSEN K ET AL: "Sensitive and Selective Photo Acoustic Gas Sensor Suitable for High Volume Manufacturing", SENSORS, 2006. 5TH IEEE CONFERENCE, IEEE,, 22 October 2006 (2006-10-22), pages 679-682, XP032024796, DOI: 10.1109/ICSENS.2007.355563 ISBN: 978-1-4244-0375-2
- Olaf Schulz: "Bestimmung physikalischer und technischer Randbedingungen zur Umsetzung eines photoakustischen Gassensors in der Mikrosystemtechnik", , 1 January 2008 (2008-01-01), XP55634544, ISBN: 978-3-939473-30-5 Retrieved from the Internet: URL:https://www.db-thueringen.de/servlets/ MCRFileNodeServlet/dbt_derivate_00014120/i lm1-2007000311.pdf [retrieved on 2019-10-22]
- J. HUBER ET AL: "A Selective, Miniaturized, Low-cost Detection Element for a Photoacoustic CO2 Sensor for Room Climate Monitoring", PROCEDIA ENGINEERING, vol. 87, 1 January 2014 (2014-01-01), pages 1168-1171, XP55634425, AMSTERDAM, NL ISSN: 1877-7058, DOI: 10.1016/j.proeng.2014.11.374

## Description

### Technical field

Examples hereinbelow refer to photoacoustic sensitive modules, e.g., for sensing pressures and/or acoustic waves within a sealed environment.

Examples refer to methods for assembling the photoacoustic sensitive modules.

Examples refer to photoacoustic gas detection systems, e.g., for determining the quantity of a target gas in a specific environment.

### Background

A photoacoustic gas detection system may be used for detecting the quantity of a target gas in a target environment by relying on the photoacoustic effect. The photoacoustic effect is a phenomenon for which pressure waves (acoustic waves) are formed following light absorption.

The photoacoustic gas detection system may comprise an emitter for emitting light in the target environment. The light may have a specific wavelength associated to the target gas (e.g., wavelength of maximum absorption typical of the target gas). The photoacoustic gas detection system may comprise a photoacoustic sensitive module in which the photoacoustic effect is to occur.

The photoacoustic sensitive module may be illightened by the emitted light, after the light has been propagated through the target environment with the target gas. The photoacoustic sensitive module may be replenished with a reference gas. The pressure of the reference gas may change by virtue of the photoacoustic effect. An acoustic sensor, arranged in the structure, may sense the pressure and provide the sensed information to a controller. The controller may measure, on the basis of the sensed acoustic waves obtained by the acoustic sensor, the quantity of the target gas in the target environment.

The acoustic sensor may include a membrane which is deformed according to the pressure within the structure. In order to obtain high sensitivity and prevision, acoustic sensors delicate membranes are used. For example, the membrane may be a micro electromechanical system, MEMS, membrane.

Exposition to light is in general dangerous for the membrane. On the other hand, the impingement with light is ineliminable, as light is necessary for permitting the occurrence of the photoacoustic effect. Hence, light is necessary; but light is dangerous. A technique for overcoming this contradiction is requested.

Schjolberg-Henriksen K et al. discloses a sensitive and selective photoacoustic gas sensor for high volume manufacturing. A layer of NiCr and Au is sputter deposited on the back side of the pressure sensor membranes to avoid direct IR radiation on the piezoresistors.

Olaf Schulz, "Bestimmung physikalischer und technischer Randbedingungen zur Umsetzung eines photoakustischen Gassensors in der Mikrosystemtechnik", discloses the academic thesis regarding the estimation of physical and technical conditions for the application of photoacoustic gas sensors. In an embodiment a modular sensor is disclosed.

This modular sensor is in accordance with the preamble of claim 1.

US 6 222 190 B1 discloses a photoacoustic infrared detector. In one example, a membrane is reached by light after the passage through a hole. In another example, the membrane is covered by reflective coating.

US 4 903 248 A discloses a photoacoustic detector in which light is provided by a waveguide. A highly reflective shield is disposed between the end of the optical waveguide and a capacitor microphone.

### Summary

The invention is defined in the independent claims.

In accordance to examples, there is provided a photoacoustic sensitive module comprising:
a sealing structure enclosing a sealed environment, the sealed environment containing a reference gas, the sealing structure including a window arranged so that incident light may enter into the sealed environment, the sealing structure including a floor;
an acoustic sensor, arranged within the sealed environment and interposed between the window and the acoustic sensor, for detecting acoustic waves caused by an interaction of incident light with the reference gas; and
a shroud, arranged within the sealed environment and interposed between the window and the acoustic sensor, to screen the acoustic sensor from incident light passing through the window, wherein the shroud is arranged so as to divide the sealed environment between an illightened chamber exposed to incident light passing through the window and an obscured chamber containing the acoustic sensor. The shroud is fitted and/or attached to a floor of the sealing structure. The shroud is laterally folded, to present at least one folded portion abutting onto the floor. The shroud is shaped so as to define the at least one gap. The acoustic sensor is attached to the floor.

Accordingly, the shroud protects the acoustic sensor, which reliably senses the pressure (e.g., acoustic waves) caused by the light.

In accordance to examples, there is provided a photoacoustic gas detection system comprising:
a photoacoustic sensitive module as above and/or below;
an emitter module for emitting light towards the window of the photoacoustic sensitive module, wherein the emitter module is positioned in an environment outside the sealed environment; and
a controller module for measuring, on the basis of the sensed acoustic waves obtained by the acoustic sensor of the emitter, the quantity of a target gas in the outside environment.

In accordance to examples, there is provided a method for assembling a photoacoustic sensitive module (e.g., as above), the method comprising:
providing a precursor of a sealing structure, wherein an acoustic sensor includes a floor of the sealing structure (110) and /or at least one lateral element of the sealing structure (110) and a window (120) pre-attached to the at least one lateral element (130),
providing an obscuring element to said precursor and closing the precursor to obtain the sealing structure,
wherein the obscuring element is provided so that the sealing structure (110) has at least one part (which permits the passage of light from an external environment, but the obscuring element obscures the acoustic sensor.

### Figures

Fig. 1 shows a three-dimensional, cross-sectional view of a module according to an example.
Figs. 2a and 2b show three-dimensional views of an element of the module of Fig. 1.
Fig. 2c shows a three-dimensional, cross-sectional view of an element of the module of Fig. 1.
Figs. 3-1, 3.2, 3.3 show cross-sectional view of modules according to examples.
Fig. 4 shows an example of a system comprising a module according to any of Figs. 1-3.3.
Fig. 5a shows a method for assembling the modules of Figs. 3.1 and 3.3.
Fig. 5b shows a method for assembling the module of Fig. 3.2.
Fig. 5c shows an alternative method for assembling the module of Fig. 3.1.
Fig. 5d shows an alternative method for assembling the module of Fig. 3.3.
Figs. 6.1-6-4, 7.1, 7.2, 8.1, 8.2, 9.1, 9.2, 10.1, 10.2, 11.1, and 11.2 show intermediate passages for assembling the modules Figs. 1-3.3.

### Examples

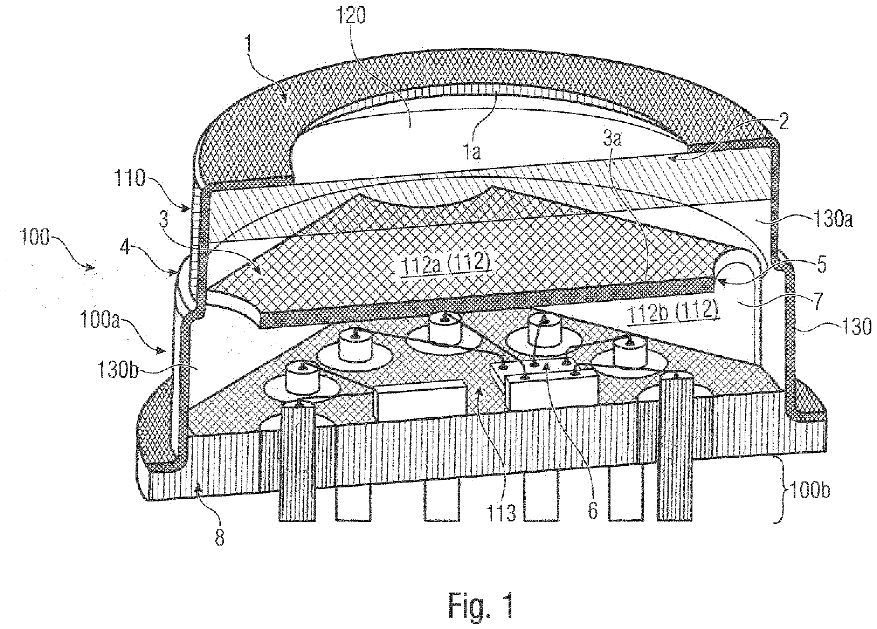

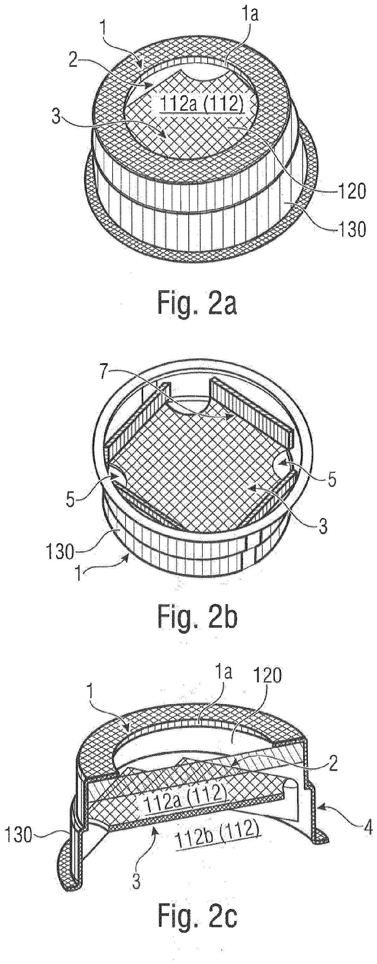

Fig. 1 shows a first example of photoacoustic sensitive module 100. Details thereof are shown in Figs. 2a-2c.

The photoacoustic sensitive module 100 comprises an acoustic sensor 6. The sensor 6 may be a micro electromechanical system (MEMS).

The sensor 6 may be of the type having a membrane which may deform following the pressure (e.g., to acoustic waves). The membrane may consist of, or comprise, silicon or compounds of silicon. For example, the membrane may consist of, or comprise, a layer of silicon or compounds of silicon. The membrane may be an electric conductor which changes its impedance following its deformation. Accordingly, by relying on the deformation of the membrane, pressure and variations of pressure (e.g., sound, acoustic waves) are detected. The acoustic sensor 6 may be of the microphone-type, for example.

In some situations, the membrane can be damaged. This may occur when the membrane is directly impinged by light of enough intensity and for a prolonged time.

The membrane may not present a layer of epoxy. It has been noted, in fact, that with an epoxy layer the sensor may deviate from its intended operation, as the membrane would not deform correctly.

The photoacoustic sensitive module 100 comprises a sealing structure 110 which encloses a sealed environment 112. The sealed environment 112 contains a reference gas. The reference gas does not exit from the sealed environment 112, while outside gas cannot enter into the sealed environment 112. The reference gas may be or comprise carbon dioxide.

The acoustic sensor 6 is arranged within the sealing structure 110. The sealing structure 110 includes a window 120 arranged so that incident light may enter into the sealed environment 112. Within the sealing structure 110, a shroud (insert, cover, obscuring element) 3 is housed. The shroud 3 is arranged within the sealed environment 112. The shroud 3 is interposed between the window 120 and the acoustic sensor 6. Accordingly, the acoustic sensor 6 is screened (repaired, obscured) from incident light passing through the window 120. While the acoustic sensor 6 is sensitive to the pressure (e.g., to acoustic waves), caused by the interaction with the light, no damage is caused to the acoustic sensor, as light is prevented from arriving at the acoustic sensor 6.

The photoacoustic sensitive module 100 may have the configuration of a transistor outline, TO. Some TO configurations are standardized. A TO configuration may be based on a TO can 100a and TO pins 100b which protrude from the can 100a. The TO can 100a may have a shape which is at least partially developed cylindrically. The TO pins 100b may have a prolonged shape. The TO pins 100b may mostly develop along a longitudinal direction which prolongs the axial direction of the TO can 100a (or a slightly slanted direction). The TO pins 100b may have a structural function, as they may be capable of sustaining the TO can 100a. The TO pins 100b have in general an electric function, as they may provide input/output to components (such as the acoustic sensor 6) which are in the TO can 100b. The TO pins 100b may be attached (e.g., welded) to other electric components and/or conductors, e.g., supported by a PCB. The TO can 100 may include the sealing structure 110.

Even if the present examples mostly refer to TO configurations, this is not always strictly necessary, and the sealing structure 110 will be described without particular reference to the TO configurations.

The sealing structure 110 may comprise several elements, which are attached to each other to form one single structure capable of maintaining the reference gas within the sealed environment 112 and preventing the gas of the outside environment from entering in the sealed environment 112.

The sealing structure 110 comprises a floor (header) 8. The floor 8 may have a shape which is mainly planar or surficial. The floor 8 may be a laminar element. The acoustic sensor 6 is attached (e.g., glued or welded) to the floor 8. Other circuitry 113 (e.g., application specific integrated circuit, ASIC, circuitry, bond wires, etc.) may be within the sealed environment 112 and supported by the 8.

Pins 100b (which may also be standardized according to the TO standard) may traverse the floor 8 to arrive at the acoustic sensor 6 and/or other circuitry, so as to provide input/output thereto.

The sealing structure 110 may comprise a lateral wall (lateral element) 130. The lateral wall 130 may be a surficial element. The lateral wall 130 may have a shape which develops at least partially cylindrically or prismatically (e.g., to form a parallelepiped). The lateral wall 130 may be attached (e.g., glued or welded) to the floor 8.

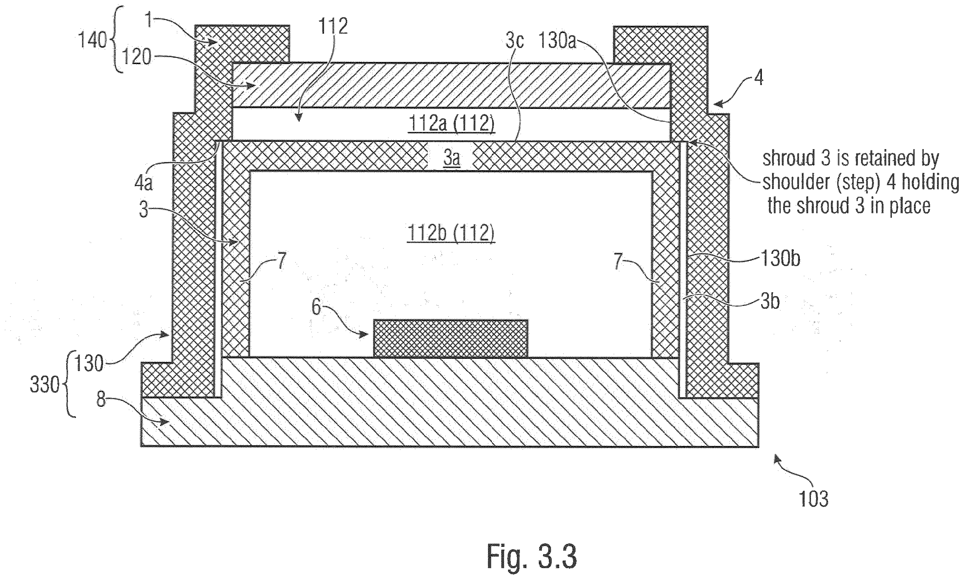

In examples (e.g., Figs. 1 and 3.3), the lateral wall 130 may include a step 4. For example, the step 4 may be in correspondence to a modification of the diametrical dimension of the lateral wall 130: for example, the step (shoulder) 4 may define the change between a first cylindrical portion 130b (e.g., with large diameter) and a second cylindrical portion 130a (e.g., with reduced diameter). For example, the first cylindrical portion 130b may be a portion proximal to the floor 8 with respect to the second portion 130a (which may therefore be a distal portion).

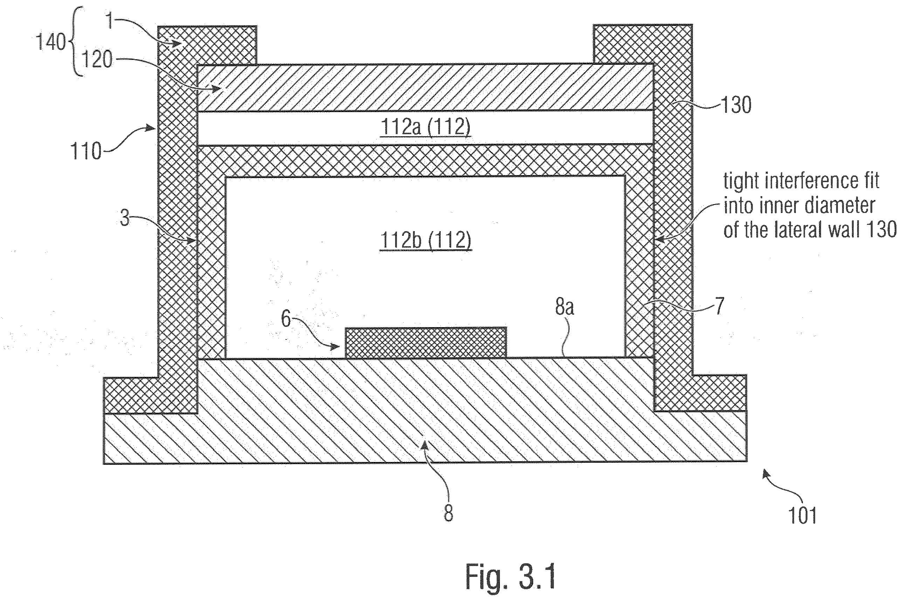

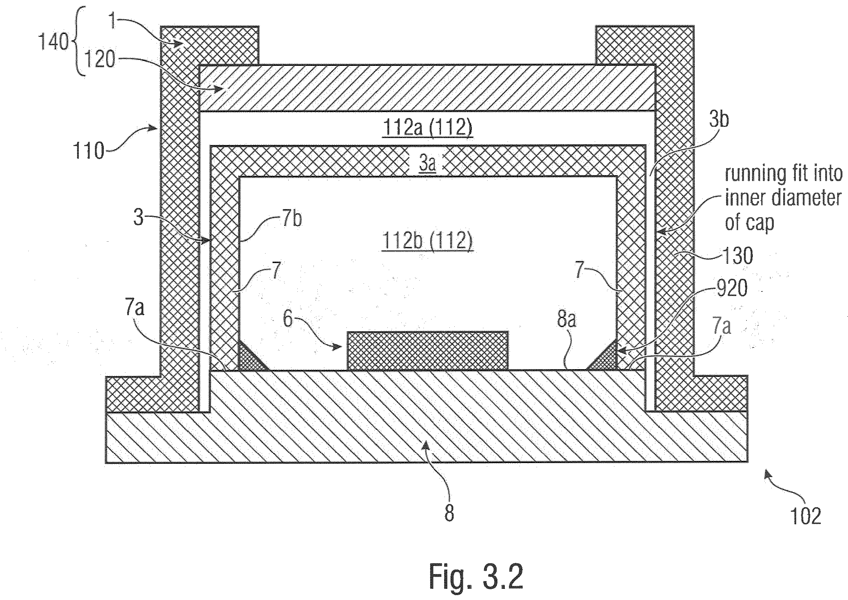

In other examples (e.g., Figs. 3.1 and 3.2), a step is not present (no subdivision between first and second portions 130a and 130b). The sealing structure 110 may be cylindrical or prismatic (e.g., to define a parallelepiped).

In the following, reference is always made to cylindrical elements and to related concepts (e.g., diameter, radial dimensions, etc.). However, the same applies to prismatic elements. Instead of concepts associated to the diameter and the radius, the concepts associated to transversal direction may be easily used.

The sealing structure 110 may comprise an outer cover 140. The outer cover 140 may be attached (e.g., glued or welded) to the lateral wall 130.

A window 120 may be an element of the sealing structure 110. The window 120 may be a part of the outer cover 140. The window 120 may be made of vitreous material (e.g., glass). The window 120 may be transparent. The window 120 may permit the passage of light there through.

The sealing structure 110 may comprise an external cap 1. The external cap 1 may be or attached (e.g., glued or welded) to the lateral wall 130. For example, the window 120 may be attached (e.g., glued or welded) to the external cap 1 (which in turn may be attached to the lateral wall 130), so that the window 120 results attached to the sealing structure 110. In addition or alternative, the external rim of the window 120 may be attached (e.g., glued or welded) to distal zones of the internal surface of the lateral wall 130. The external cap 1 may extend circumferentially around a rim of the lateral wall.

In some examples, the external cap 1 is natively integrated (e.g., in one piece) with the lateral wall 130. In that case, during assembling, the window 120 may be introduced within the sealing structure 110 from below up to abut onto the internal surface of the external cap 1. Glue or welding material (or a press-fit engagement) may be used for attaching the window to the external cap 1.

In general terms, it is not strictly necessary for the window 120 to be part of the outer cover 140. A transparent part (window) may in principle also provided in other elements of the sealing structure 110. For example, a window may be obtained in some regions of the lateral wall 130 (e.g., in the second portion 130a). Notwithstanding, the implementation of the window to the outer cover 140 appears easier to be assembled and structurally more reliable, in particular where the window 120 has shape which is at least mostly planar and surficial.

While the window 120 is in transparent material, other elements 8, 130 ,1 (e.g., at least one of or all the remaining elements) of the sealing structure 110 may be opaque. At least some of the elements 8, 130, 1 may be of metal material, synthetic material, PCB, etc.

The various elements (e.g., 8, 130, 140, 1, 120) of the sealing structure 110 permit to enclose a reference gas into the sealed, closed environment 112. The acoustic sensor 6 (housed within the environment 112) therefore permits the detection of pressures (e.g., acoustic waves) within the environment 112. Light propagates in the environment 112 after passing through the window 120, interacting with the reference gas, and modifying the pressure of the gas, the pressure (e.g., in the form of acoustic waves) being detected by the sensor 6. Unfortunately, light is in general dangerous for the membrane of the acoustic sensor 6.

However, it has been understood that it is possible to make use of the shroud (insert, cover, obscuring element) 3 to overcome this inconvenience. The shroud 3 obscures the acoustic sensor 6 from the light, thus saving the membrane. The shroud 3 is arranged between the window 120 and the acoustic sensor 6. The shroud 3 may be a laminate. The shroud 3 may have a mostly planar or surficial portion 3a (e.g., central portion), which may be arranged to be at least mostly parallel to the floor 8 and/or the outer cover 140 (e.g., the window 120). The shroud 3 is laterally folded, e.g., to present lateral folded portions 7 which may act as legs, and permit to keep the shroud 3 in place. The lateral folded portions 7 are integral in one piece with the planar or surficial portion 3a of the shroud 7. Without the surficial portion 3a, the window 120 would directly face the acoustic sensor 6. The surficial portion 3a may extend in parallel to the window 120 and/or the floor (header) 8.

The shroud 3 divides the sealed environment 112 between a first, obscured chamber 112b and a second, illightened chamber 112a. The acoustic sensor 6 is housed in the obscured chamber 112b. The window 120 faces the shroud 3 (and in particular the surficial portion 3a of the shroud 3) and illuminates the illightened chamber 112a. Light propagating from outside therefore hits the shroud 3, which screens the acoustic sensor 6 from being irradiated. The obscurity of the obscured chamber 112b is therefore at least partially due to the presence of the shroud 3 (also the opacity of the lateral wall 130 may contribute to the obscurity). The shroud 3 is in contact with the structure 110 (with the floor 8 and, in some examples, also with the lateral wall 130). The shroud 3 may be separated from the acoustic sensor 6.

In examples with a first and a second cylindrical portions (e.g., 130a and 130b, Figs. 1 and 3.3), the obscured chamber 112b may correspond to the first cylindrical portion 130b, and the illightened chamber 112a may correspond to the second cylindrical portion 130a.

Gap(s) 5 is (are) defined in the shroud 3 (e.g., at least in the planar or surficial portion 3a). Accordingly, gas may move from the illightened chamber 112a to the obscured chamber 112b, and vice versa, so that the pressure of the illightened chamber 112a changes in accordance to the pressure in the obscured chamber 112b. When the pressure in the illightened chamber 112a is modified by virtue of the light, the pressure in the obscured chamber 112b is also modified. For example, the pressure in the obscured chamber 112b may become the same of the pressure in the illightened chamber 112a, by virtue of the fluid communication provided by the gap(s). Acoustic waves may therefore propagate through the shroud 3, even if the latter may screen the light.

Techniques may be implemented to minimize the probability that unwanted rays arrive at the sensor 6 (e.g., directly and/or by reflection at the shroud 3, at the internal surfaces of the lateral wall 130, at the floor 8, etc.).

According to a particular technique, the gap(s) may, partially or entirely, be placed at the periphery of the shroud 3, e.g., in correspondence to the internal surface of the lateral wall 130. The opacity of the wall 130 may therefore reduce the quantity of rays arriving to the gap(s) 5. In combination or in alternative, some rays are also prevented from arriving to the gap(s) 5 by virtue of the external cap 1, which also contributes to screen the gap(s) 5. In particular, the external cap 1 may be at least partially arranged over at least one of the gap(s), so that rays directly arriving form above do not reach the gap(s). As shown in Fig. 1, the peripheral extension (e.g., in a diametrical direction) of the external cap 1 may be greater than the peripheral extension (e.g., in the same diametrical direction) of the gap(s) 5. For example, the external cap 1 may extend, from the lateral wall 130 toward the center, for more than at least one of the gap(s). For example, a projection of at least one of the gap(s) 5 in the vertical direction encounters the external cap 1 and/or does not encounter the window 120.

Another technique (which may be combined with one or more of those described above) may be to arrange the acoustic sensor 6 in a position which is more distant to the lateral wall 130 than the extension of the gap(s) 5 in diametrical direction. For example, the acoustic sensor 6 may be placed so that its projection in vertical direction encounters the shroud 3 (e.g., the planar or surficial portion 3a) and does not encounter the gap(s) 5. Accordingly, even if rays sporadically enter in the obscured chamber 112b they hardly arrive at the membrane of the acoustic sensor 6.

In addition or in alternative, the acoustic sensor 6 may be displaced at a position for which a cone with vertex in the membrane, and passing along the internal border 1a of the external cap 1, does not encounter any of the gap(s) 5. Accordingly, none of the rays (direct or slanted) entering through the window 120 into the illightened chamber 112a does directly arrive at the acoustic sensor 6.

In examples, the internal surface of the wall 130 may have a non-reflecting color. Accordingly, no rays are reflected by the wall 130, and it is therefore more difficult for the rays to arrive at the acoustic sensor 6.

Figs. 3.1, 3.2, 3.3 show three examples of photoacoustic sensitive modules 101, 102, 103, respectively. In these figures, the gap(s) are not shown, even if they are placed at peripheral positions, as in Fig. 1.

### The example of Fig. 3.1

In Fig. 3.1, a photoacoustic sensitive module 101 has tight interference fit into the internal surface of the lateral wall 130.

The shroud 3 has an external diameter which is natively larger than the internal diameter of the lateral wall 130. In this configuration the folded portion(s) 7 tend to expand and return to their original shape, and exert a force which acts on the lateral wall 130. This phenomenon may be caused, for example, by the elasticity of the material of the shroud 3 and/or the lateral wall 130. Accordingly, high static friction is caused between the shroud 3 and the lateral wall 130, which keeps the shroud 3 in position. In some examples, glue or weld may also be used, while in other examples, glue and weld are avoided (hence reducing the manufacturing steps).

In addition or alternative, the lower border of the folded portion(s) 7 may abut onto the internal surface 8a of the floor 8. In some examples, glue or weld may also be used between the shroud 3 and the lateral wall 130, while in other examples, glue and weld are avoided (hence reducing the manufacturing steps).

Besides the effect of providing the tight interference fit and/or the abutment to the floor 8, the folded portion(s) 7 may also define the axial extension of the obscured chamber 112b. Hence, there is not necessity for providing other elements which define the axial extension of the obscured chamber 112b.

### The example of Fig. 3.2

In Fig. 3.2, another example of photoacoustic sensitive module 102 has the shroud 3 in close-running fit into the internal surface of the lateral wall 130.

The shroud 3 has an external diameter which is smaller than the internal diameter of the lateral wall 130. In this configuration, a vertical gap 3b is defined, which prevents the shroud 3 from contacting the lateral wall 130. In examples, glue or weld material 920 may be used for attaching the shroud 7 (and in particular the rim 7a of the leg(s) 7) to the floor 8. For example, the glue or weld material 920 may be arranged to contact both the internal surface 8a of the floor 8 and internal surface(s) 7b of the leg(s) 7 (the internal surface(s) 7b of the leg(s) 7 are internal to the obscured chamber 112b).

### The example of Fig. 3.3

In Fig. 3.3, another example of photoacoustic sensitive module 103 has the shroud 3 retained by the step (shoulder) 4 defined in the lateral wall 130 (see also Fig. 1). In this case, the shroud 3 may be engaged with the lateral wall 130 by virtue of being retained within the step 4. The shroud 3 cannot move vertically towards above by virtue of the presence of the step 4, which keeps the shroud 3 in place. In some examples, the external surface 3c of the planar or surficial portion 3a may contact an internal surface 4a of the step 4. In alternative, the external surface 3c of the planar or surficial portion 3a may in general avoid the contact with the internal surface 4a of the step 4, but, in case of particular solicitations, may notwithstanding stop the shroud 3 from sliding towards above.

A close-running fit may be provided between the legs 7 of the shroud 3 and the lateral wall 130.

The combination of the effects may permit to maintain the shroud 3 in place without the use of glue or weld material: the step 4 and the floor 8 prevent from vertical movements, while the lateral wall 130 prevents form movements in radial direction.

In alternative examples, however, glue or weld material may be used to attach some of the components.

### The photoacoustic gas detection system

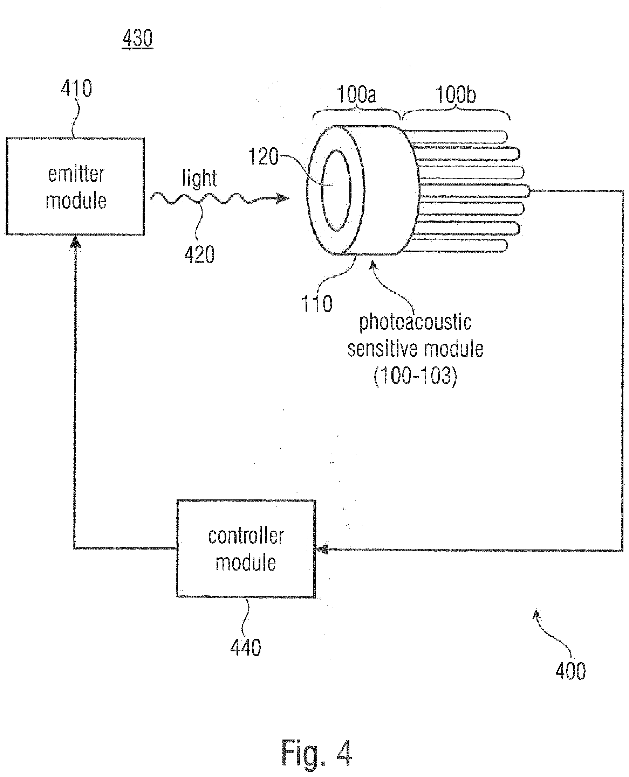

A photoacoustic gas detection system 400 is shown in Fig. 4. The photoacoustic gas detection system 400 may be used for detecting the quantity of a target gas (e.g., carbon dioxide, CO₂) in a target environment 430 (which may be also a closed environment, replenished with a target gas).

The photoacoustic gas detection system 400 may comprise an emitter module 410 for emitting light 420 in the target environment 430. The light 420 may be at specific wavelength band(s), which may be associated to the target gas whose quantity is to be determined. The bands may be in the visible band and/or in the infrared (IR) band. The bands may contain, for example, the wavelength of maximum absorption typical of the target gas (e.g., 4.26 µm for CO₂). The emitter module 410 may emit pulses of light at specific time instants and for specific intervals. The emitter module 410 may be controlled by a controller module 440.

The photoacoustic gas detection system 400 may comprise a photoacoustic sensitive module in which the photoacoustic effect is to occur. The photoacoustic sensitive module may be one of the above-described modules 100-103.

The photoacoustic sensitive module (100-103) may be illightened by the emitted light 420, after the light 420 has traversed the target environment 430 the target gas.

The emitter module 410 may be arranged to face the window 120 of the photoacoustic sensitive module (100-103), so that light 420 directly propagates towards the sealed environment 112. Notwithstanding, the light 420 has no disruptive influence on the acoustic sensor 6 housed in the sealed environment 112. In the photoacoustic sensitive module (100-103), acoustic waves are generated on the basis of the light arriving into the sealed environment 112 within the sealing structure 110.

The acoustic sensor 6, arranged in the sealing structure 112, may sense the pressure (acoustic waves) and provide (e.g., through pins 110b) the sensed information to the controller module 440. The controller module 440 may measure, on the basis of the sensed acoustic waves obtained by the acoustic sensor 6, the quantity of the target gas in the target environment 430, e.g., by comparing information associated to the waves of the emitted light 420 and information associated to the measured acoustic wave.

### Example of methods

Methods 500a, 500b, 500c, 500d are here disclosed for assembling a photoacoustic sensitive module, e.g., 100-103. One of these methods may comprise:
- providing (step 520) a precursor of a sealing structure, wherein an acoustic sensor is attached to the precursor;
- providing (step 530) an obscuring element (shroud) to said precursor and closing the precursor to obtain the sealing structure.

The obscuring element is provided so that the sealing structure has at least one part (e.g., window) which permits the passage of light from an external environment, but the obscuring element obscures the acoustic sensor.

Notably, the steps may be performed in an environment which contains the reference gas that is to be contained in the sealed environment. Hence, at the end of the method the gas is already contained within the sealing structure.

### A first method for assembling the module of Fig. 3.1

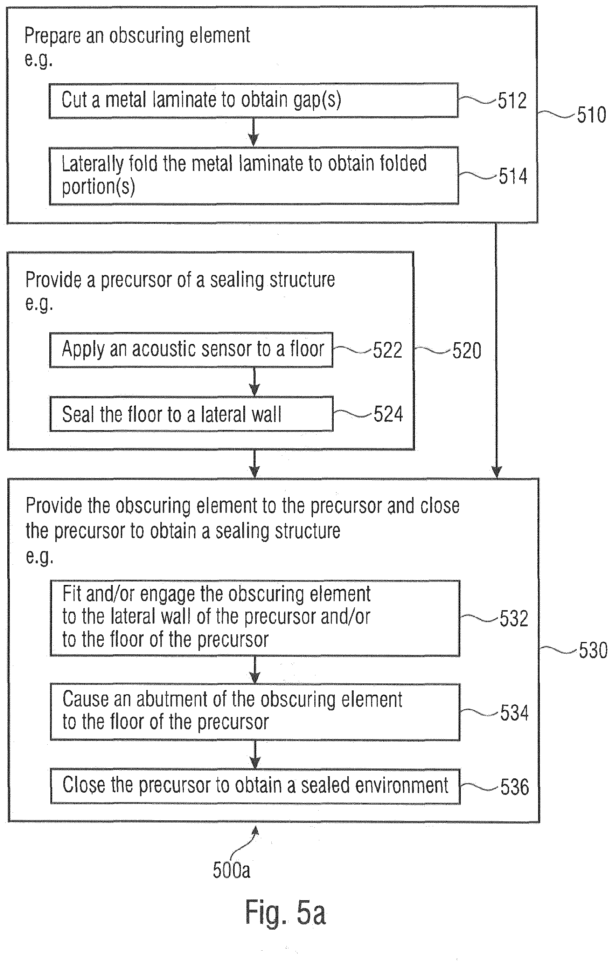

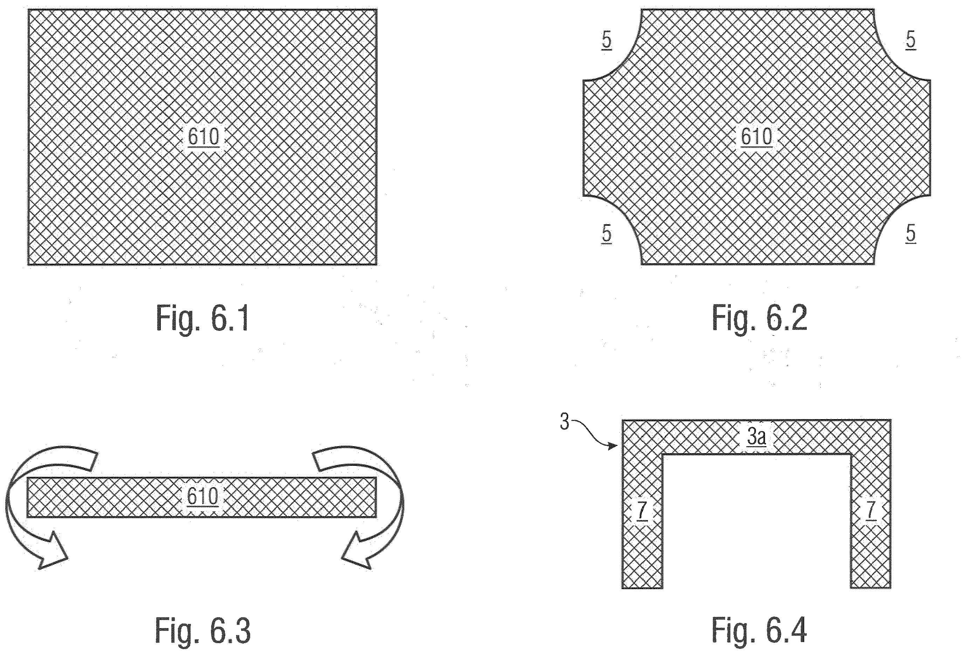

Fig. 5a shows a method 500a for assembling the photoacoustic sensitive module 101 of Fig. 3.1. Reference can also be made to Figs. 6.1-6.4, 7.1, 7.2, 8.1, 8.2.

At step 510, an obscuring element 3 (shroud) may be obtained (see also the sequence of Figs. 6.1 to 6.4). For example (substep 512), a laminate (e.g., a metal laminate) 610 (shown in Fig. 6.1) or an element with a surficial or planar shape is cut (e.g., at peripheral, lateral positions) to obtain lateral gaps 5 (shown in Fig. 6.2). Subsequently (substep 514; Fig. 6.3), lateral portions of the laminate 610 are folded to obtain folded portions (legs) 7 of the laminate. The obscuring element 3 is therefore obtained.

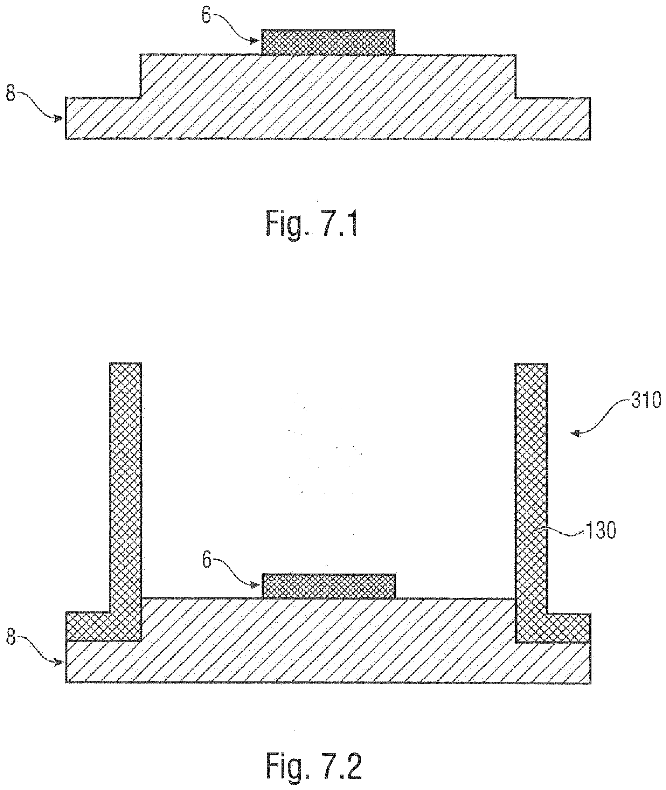

At step 520 (which may be performed before, after, or in parallel to step 510), a precursor 310 of the sealing structure 110 is provided. In particular (substep 522 and Fig. 7.1), the acoustic sensor 6 may be attached (e.g., sealed) to the floor (header) 8. Further (substep 524 and Fig. 7.2), the floor 8 is attached to the lateral wall (lateral element) 130. The precursor 310 of the sealing structure 110 is therefore obtained.

Steps 510 and 520 may be performed so that dimensions of the obscuring element 3 (e.g., external diameter) and dimensions of the lateral wall 130 (e.g., internal diameter) are such that the obscuring element 3 is radially slightly more extended than the dimension of the space 112 enclosed by the internal surface of the lateral wall 130.

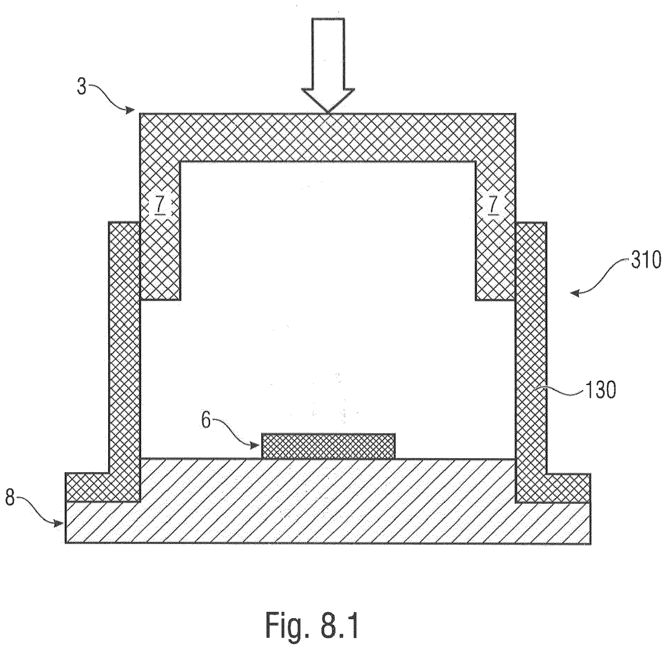

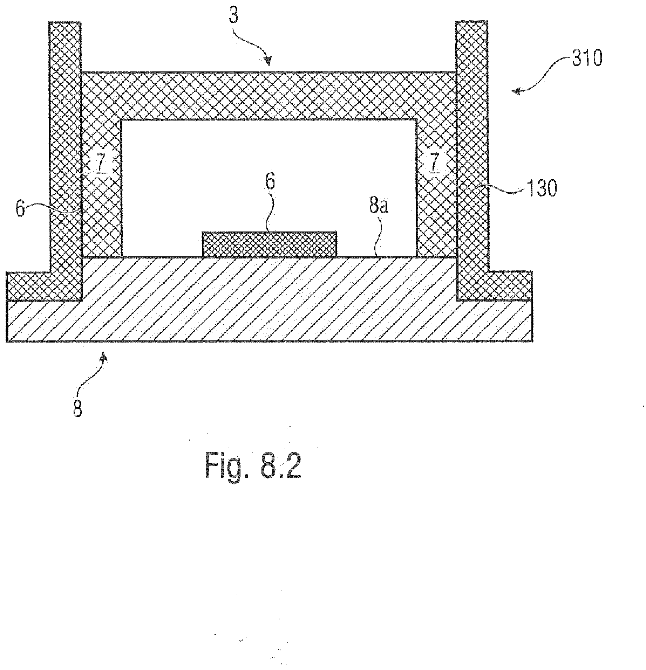

At step 530, the obscuring element (shroud) 3 is provided to the precursor 310 and the precursor 310 is closed. For example, at substep 532, the obscuring element 3 is fitted and/or engaged to the precursor 310. For example (Fig. 8.1), the obscuring element 3 may be introduced into the precursor 310 (e.g., from above). The legs 7 of the obscuring portion 3 may slide against the internal surface of the lateral wall 130 up to the abutment (substep 534) of the legs 7 with the internal surface 8a of the floor 8.

Friction may be caused while the obscuring element 3 slides against the internal surface of the lateral wall 130. Finally, the precursor 310 is closed (e.g., by the outer cover 140 and/or the window 120), so as to obtain the closed sealing structure 110. The obscuring element 3 is therefore fitted into the precursor 310 (and in particular to the lateral wall 130). Elastic forces may be exerted between the legs 7 and the lateral wall 130, which keep the obscuring element 130 in place.

### A second method for assembling the module of Fig. 3.1

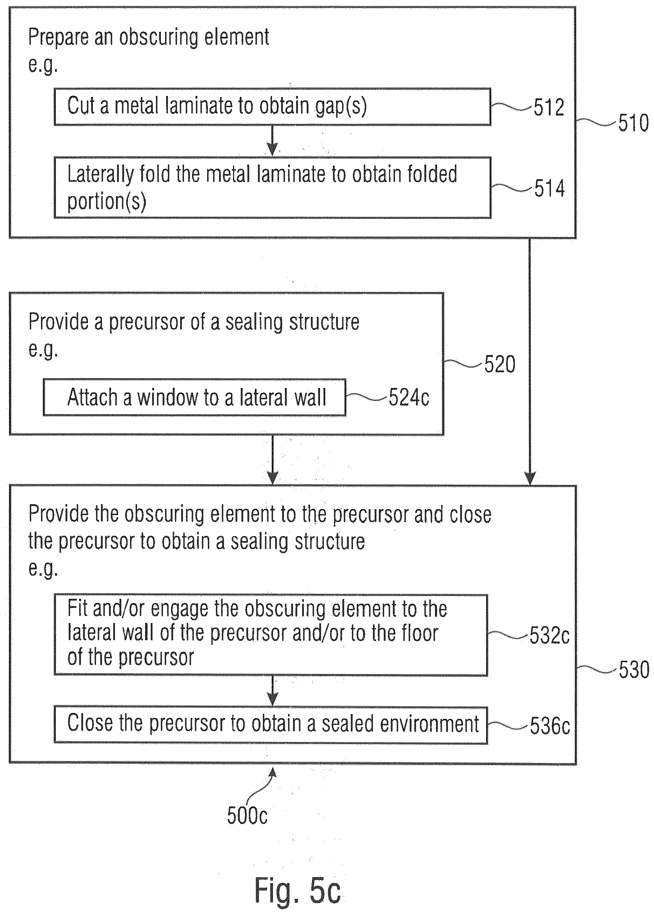

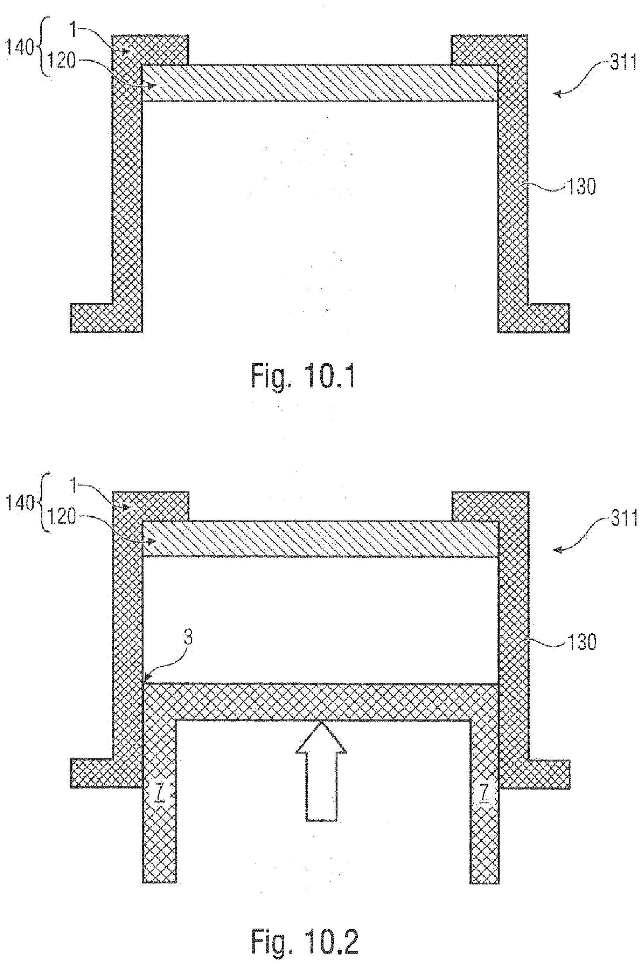

It is possible to assembly the photoacoustic sensitive module 101 of Fig. 3.1 using method 500c of Fig. 5c. Reference is also made to Figs. 10.1 and 10.2. In this variant, the precursor 311 includes the window 120 and the lateral wall (lateral element) 130. The shroud is inserted "from below" and, finally, the floor 8 (with the acoustic sensor mounted thereto) is provided to close the structure 110.

At step 510, the obscuring element 3 (shroud) may be obtained as explained above (see Figs. 6.1-6.4 and substep 512-514).

At step 520 (which may be performed before, after, or in parallel to step 510), a precursor 311 of the sealing structure 110 is provided, e.g., providing the window 120 (e.g. with the outer cap 1). See Fig. 10.1. This may be obtained (e.g., step 524c) by attaching the window 120 to the lateral wall 130. The outer cap 1 may also be provided (e.g., it may be integral in a single piece with the lateral wall 130, and the window 120 may be inserted therein).

As for the first method, steps 510 and 520 may be performed so that dimensions of the obscuring element 3 (e.g., external diameter) and dimensions of the lateral wall 130 (e.g., internal diameter) are such that the obscuring element 3 is radially slightly more extended than the space within the internal surface of the lateral wall 130.

At step 530, the obscuring element (shroud) 3 is provided to the precursor 311 and the precursor 311 is closed. For example, at substep 532c, the obscuring element 3 is fitted and/or engaged to the precursor 311. For example (Fig. 10.2), the obscuring element 3 may be introduced into the precursor 311 (e.g., from below). The legs 7 of the obscuring portion 3 may slide against the internal surface of the lateral wall 130. For example (substep 536c), the precursor 311 is closed by providing the floor 8 with the sensor 6 attached thereto (hence, appearing as in Fig. 7.1).

Even in this case, friction may be generated while the obscuring element 3 slides against the internal surface of the lateral wall 130. Finally, the precursor 311 is closed (e.g., by the outer cover 140 and/or the window 120), so as to obtain the closed sealing structure 110. The obscuring element 3 is therefore fitted into the precursor 311 (and in particular to the lateral wall 130). Elastic forces may be exerted between the legs 7 and the lateral wall 130, which keep the obscuring element 130 in place.

### A method for assembling the module of Fig. 3.2

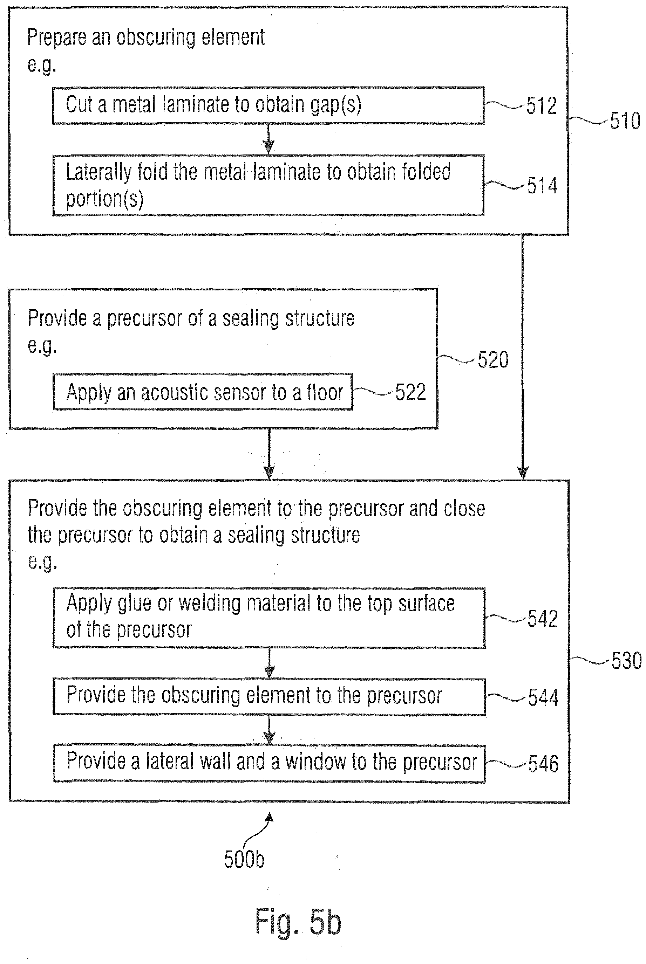

Fig. 5b shows another example of method 500b for assembling the photoacoustic sensitive module 102 of Fig. 3.2.

At step 510, an obscuring element 3 (shroud) may be obtained, e.g., using substeps 512 and 514 discussed above (see also the sequence of Figs. 6.1 to 6.4).

At step 520 (which may be performed before, after, or in parallel to step 510), a precursor 320 of the sealing structure 110 is provided. The precursor 320 may be obtained, for example (substep 522), by applying (e.g., sealing) the acoustic sensor 6 to the floor (header) 8.

At steps 510 and 520, dimensions of the obscuring element 3 (e.g., external diameter) and of the lateral wall (lateral element) 130 (e.g., internal diameter) may be chosen so that the obscuring element 3 is radially less extended than the space within the internal surface of the lateral wall 130.

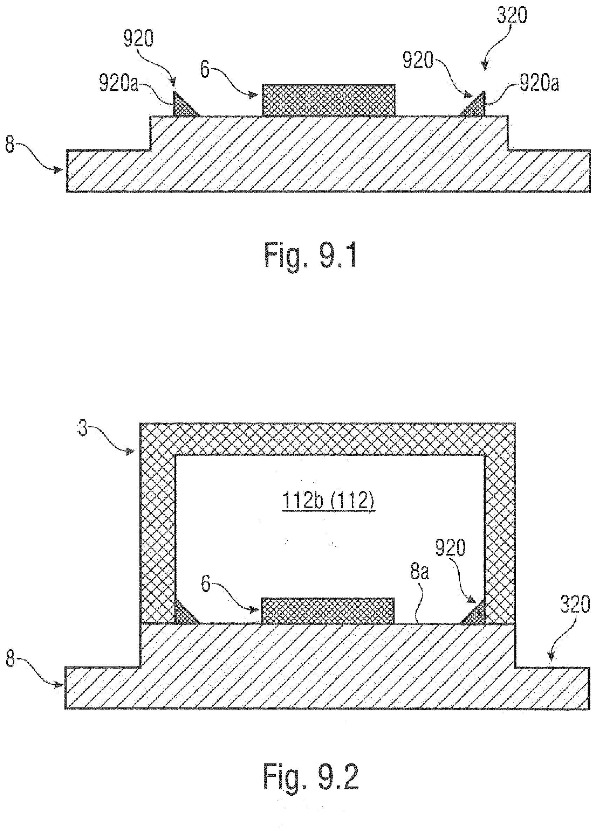

At step 530, the obscuring element 3 is provided to the precursor 320. The precursor 320 is closed. For example (step 542; Fig. 9.1), glue or welding material 920 may be applied to the top surface 8a of the floor 8, in particular at a position corresponding to the internal surface 7b of the leg(s) 7 of the shroud 3, so that the peripheral extremity 920a of the glue or welding material 920 will come into contact with the internal surface 7b of the leg(s) 7. Subsequently (step 544), the obscuring element 3 may be applied to the precursor 320, e.g., so as to be attached to the precursor 320 in correspondence to the glue or welding material 920. Subsequently (substep 546), the lateral wall 130 and the window 120 may be applied to the precursor 320, to close the sealing structure 110 and to obtain the photoacoustic sensitive module 102 of Fig. 3.2. In this case, the obscuring element 3 is in a looser running fit into the inner diameter of the call 130. The outer cover 140 and/or the window 120 may be pre-attached to the lateral wall 130 or may be attached at step 546.

### A first method for assembling the module of Fig. 3.3

Fig. 5a may be used for illustrating a method 500a for assembling the module 103 of Fig. 3.3.

At step 510, an obscuring element 3 (shroud) may be obtained, e.g., using substeps 512 and 514 discussed above (see also the sequence of Figs. 6.1 to 6.4.).

At step 520 (which may be performed before, after, or in parallel to step 510), a precursor 330 of the sealing structure 110 is provided (the precursor 330 is shown in Fig. 3.3). In particular (substep 522), the acoustic sensor 6 is attached (e.g., sealed) to the floor (header) 8. Further (substep 524), the floor 8 may be attached to the lateral wall (lateral element) 130. The lateral wall 130 is of the type having a step (shoulder) 4, e.g., defining two different diameters in two different portions (130a, 130b) of the lateral wall 130. The precursor 330 of the sealing structure 110 may therefore be obtained.

At steps 510 and 520, dimensions of the obscuring element 3 (e.g., external diameter) and of the lateral wall 130 (e.g., internal diameter) may be chosen so that the obscuring element 3 is radially less extended than the space within the internal surface of the lateral wall 130. Moreover, dimensions of the obscuring element 3 (e.g., length of the leg(s) 7 in the axial direction) and of the lateral wall 130 (e.g., height, in the axial direction, of the first, proximal chamber 130b, i.e.., the distance between the step 4 and the floor 8) may be chosen so that the axial extension of the obscuring element 3 is reduced with respect to the axial direction of the first, proximal chamber 130b (distance between the step 4 and the floor 8).

At step 530, the obscuring element (shroud) 3 is provided to the precursor 330 and the precursor 330 is closed. For example, at substep 532, the obscuring element 3 may be fitted and/or engaged to the precursor 330. For example, the obscuring element 3 may be introduced into the precursor 330 (e.g., from above). The legs 7 of the obscuring portion 3 may slide against the internal surface of the second, distal chamber 130a up to reach the situation in which the whole shroud 3 is inserted into the first, proximal chamber 130b. In particular, an abutment (substep 534) of the legs 7 with the internal surface 8a of the floor 8 may be achieved.

Friction may occur while the obscuring element 3 slides against the internal surface of the second, distal chamber 130b. The elasticity of the material constituting the lateral wall 130 (which defines the second, distal chamber 130b) obstacles the insertion, but, when the whole shroud 3 is inserted into the first, proximal chamber 130a, closes the lateral wall 130 to retain the should in its intended position.

Subsequently, the precursor 330 is closed (e.g., by the outer cover 140 and/or the window 120), so as to obtain the closed sealing structure 110. The obscuring element 3 may therefore be engaged to the precursor 330 (and in particular to the lateral wall 130).

### A second method for assembling the module of Fig. 3.3

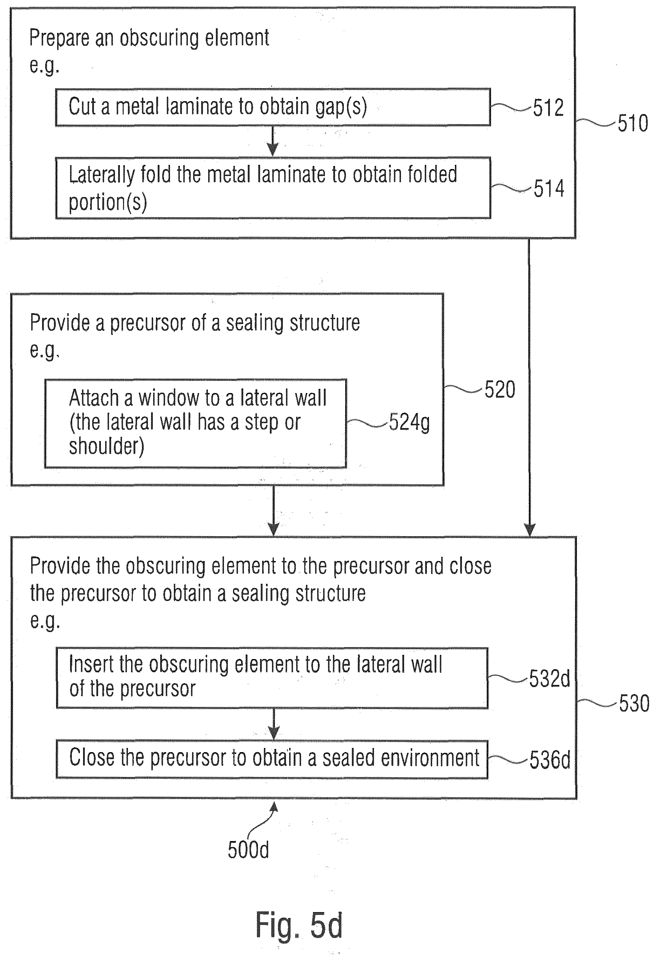

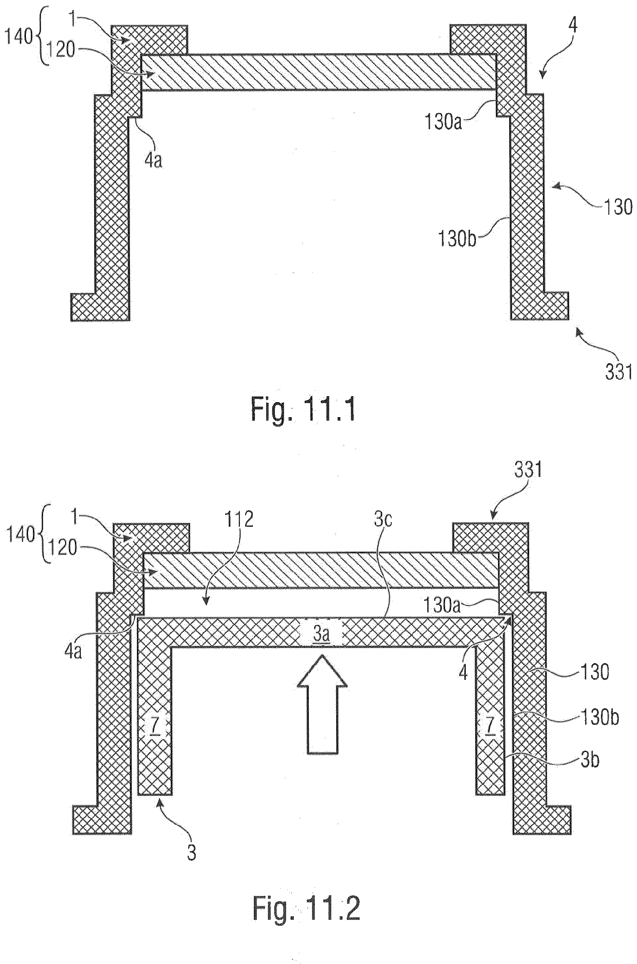

A second method 500d for assembling the module 103 is shown in Fig. 5d. Here, the window 120 is pre-attached to the lateral wall (lateral element) 130 and the floor 8 (with the sensor pre-mounted) is attached later, after the insertion of the obscuring element 3. Reference can also be made to Figs. 11.1 and 11.2.

At step 510, an obscuring element 3 (shroud) may be obtained, e.g., using substeps 512 and 514 discussed above (see also the sequence of Figs. 6.1 to 6.4).

At step 520 (which may be performed before, after, or in parallel to step 510), a precursor 331 of the sealing structure 110 is provided. In particular (substep 524g), the outer cover 140 (including the window 120 and the outer cap 1) may be attached to the lateral wall 130. The lateral wall 130 may have a step or shoulder 4, so as to define a first, proximal chamber 130b and a second, distal chamber 130a (the internal diameter of the second chamber 130a may be reduced with respect to the internal diameter of the first chamber).

At steps 510 and 520, dimensions of the obscuring element 3 (e.g., external diameter) and of the lateral wall 130 (e.g., internal diameter) may be chosen so that the obscuring element 3 is radially less extended than the space within the internal surface of the lateral wall 130. Moreover, dimensions of the obscuring element 3 (e.g., length of the leg(s) 7 in the axial direction) and of the lateral wall 130 (e.g., height, in the axial direction, of the first, proximal chamber 130b, i.e., the distance between the step 4 and the floor 8) may be chosen so that the axial extension of the obscuring element 3 is reduced with respect to the axial direction of the first, proximal chamber 130b (distance between the step 4 and the floor 8).

At step 530, the obscuring element (shroud) 3 is provided to the precursor 331 and the precursor 331 is closed. For example, at substep 532d, the obscuring element 3 may be inserted into the precursor 331 (Fig. 11.2). While in some examples (substep 534) an abutment of the legs 7 of the obscuring element with the internal surface 4a of the step 4 step may be achieved, in some other examples this is not required, and the length of the legs 7 may be less extended in the axial direction than the axial extension of the first chamber 130b. In examples, a vertical gap 3b is defined between the leg(s) 7 and the internal surface of the lateral wall 130. Subsequently, the precursor 331 may be closed, so that the module 103 appears as in Fig. 3.3.

With method 500d, no particular effort is necessary for inserting the element (shroud) 3 into the first chamber 112b, as no friction is provided by the lateral wall 130.

### Considerations

Examples above permit to solve the technical contradiction due to the light, necessary for attaining the photoacoustic effect, being also destructive for the membrane of the acoustic sensor 6. While the lightened chamber 112a may be fully illuminated, the obscured chamber 112b may safely house the acoustic sensor 6.

The present technique also goes beyond the belief that, for protecting the membrane of an acoustic sensor, the membrane should be covered by a layer of epoxy. For such a delicate environment and in order to obtain a so complicated physical phenomenon (photoacoustic effect), the presence of the epoxy adjacent to the membrane would cause the membrane not to deform correctly, thus reducing reliability.

The modules 100-103 are easily assembled with standard components and without particular effort. For example, standardized TO cans may be used. It has been understood, for example, that the shroud 3 may be easily obtained without excessive effort (e.g., as in Figs. 6.1-6.4) and may be easily inserted in the precursors (which may also be standardized). For example, standardized TO equipment was not previously used for providing a module for systems for gas detection, by virtue of the assumed non-feasibility of an adequate protection for the sensor. Further, the standard process for TO components may be used, without particular deviations from the typical way of operating.

Where the elements are pre-formed (e.g., in methods 500b, 500c, 500c), for which the precursors 320, 311, 331 are pre-formed with the window 120 pre-attached to the lateral wall 130), the manufacturing process is even more simplified, as it is simply necessary to close the sealing structure 110 after having inserted the shroud 3, without any particular additional effort.

## Claims

1. A photoacoustic sensitive module (100, 101, 102, 103) comprising:
a sealing structure (110) enclosing a sealed environment (112), the sealed environment (112) containing a reference gas, the sealing structure (110) including a window (120) arranged so that incident light may enter into the sealed environment (112), the sealing structure (110) including a floor (8);
an acoustic sensor (6), arranged within the sealed environment (112), for detecting acoustic waves caused by an interaction of incident light with the reference gas; and
a shroud (3), arranged within the sealed environment (112) and interposed between the window (120) and the acoustic sensor (6), to screen the acoustic sensor (6) from incident light passing through the window (120),
wherein the shroud (3) presents at least one gap (5) arranged to permit the passage of the reference gas,
wherein the shroud (3) is arranged within the sealed environment (112) so as to divide the sealed environment (112) between an illightened chamber (112a) exposed to incident light passing through the window (120) and an obscured chamber (112b) containing the acoustic sensor (6).
wherein the shroud (3) is fitted and/or attached to a floor (8) of the sealing structure (110), **characterised by**:
the shroud (3) being laterally folded to present at least one folded portion (7), the at least one folded portion (7) abutting onto the floor (8), the shroud (3) being shaped so as to define the at least one gap (5),
wherein the acoustic sensor (6) is attached to the floor (8).

2. The photoacoustic sensitive module of claim 1, wherein the shroud (3) is fitted and/or attached to a lateral wall (130) of the sealing structure (110).

3. The photoacoustic sensitive module of claim 1 or 2, configured according to a transistor outline, TO, configuration.

4. The photoacoustic sensitive module of any of the preceding claims, including folded portions (7) which tend to expand and return to their original shape, and exert a force which acts on the lateral wall (130).

5. The photoacoustic sensitive module of any of the preceding claims, wherein the acoustic sensor (6) is displaced at a position for which a cone with vertex in the membrane, and passing along internal border (1a) of an external cap (1), does not encounter any of the at least one gap (5).

6. The photoacoustic sensitive module of any of the preceding claims, wherein the acoustic sensor (6) is in a position which is more distant to the lateral wall (130) than the extension of the at least one gap (5) in diametrical direction.

7. The photoacoustic sensitive module of any of the preceding claims, wherein the acoustic sensor (6) is placed so that its projection in the direction of the window (2) encounters the shroud (3) and does not encounter the at least one gap (5).

8. The photoacoustic sensitive module of any of the preceding claims, wherein the shroud (3) is retained by a shoulder (4) defined in a lateral wall (130) of the sealing structure (110).

9. The photoacoustic sensitive module of any of the preceding claims, wherein the shroud (3) is made of a metallic material.

10. A method (500a, 500b, 500c, 500d) for assembling a photoacoustic sensitive module (100, 101, 102, 103), the method comprising:
providing a floor (8) of a sealing structure (110) with an acoustic sensor (6) attached thereto,
providing (520) a precursor (310, 311, 320, 330, 331) of a sealing structure (110), wherein the precursor (310, 311, 320, 330, 331) includes:
the floor (8) of the sealing structure (110) and optionally at least one lateral element (130) of the sealing structure (110) or
at least one lateral element (130) of the sealing structure (110) and a window (120) pre-attached to the at least one lateral element (130),
providing (530) a shroud (3) to said precursor (310, 311, 320, 330, 331) and closing (530) the precursor (310, 311, 320, 330, 331) to obtain the sealing structure (110),
wherein the shroud (3) is provided so that the sealing structure (110) has at least one part (120) which permits the passage of light from an external environment (430), but the shroud (3) obscures the acoustic sensor (6),
wherein the shroud (3) is laterally cut (512) with at least one gap (5) for permitting a fluid communication through the shroud (3), and
further comprising folding (514) the shroud (3) to obtain at least one folded portion (7), so that the folded portion (7) adheres to the floor (8) of the sealing structure (110) having the acoustic sensor attached thereto.

11. The method of claim 10, wherein the precursor (310, 311) is of the type including the includes at least one lateral element (130) and the pre-attached window (120),
wherein providing (530) the shroud (3) includes fitting (532) and/or engaging the shroud (3) to the at least one lateral element (130) through an interference fit.

12. The method of claim 10, wherein the precursor (320) is of the type including the floor (8), wherein providing (530) the shroud (3) includes applying (542) glue or welding material (920) to the precursor (320) so as to attach the shroud (3) to the precursor (320) in correspondence of the glue or welding material (920) and to subsequently provide (546) a close-running fit of the shroud (3) and the lateral wall (130) of the sealing structure (110).

13. The method of any of claims 10 to 12, wherein at least one lateral element (130) of the sealing structure (110) is shaped to have a step (4) so that the shroud (3) is engaged (532) through the step (4).

14. The method of any of claims 10 to 13, wherein folding comprises: folding (514) the shroud (3) to obtain the at least one folded portion (7), so that the folded portion (7) fits and/or engages (532) to at least one lateral element (130) of the precursor (310, 311, 320, 330, 331) and/or is retained by a shoulder (4) defined in the at least one element (4, 8) of the precursor (310, 311, 320, 330 ,331).

15. The method of any of claims 10 to 14,
wherein providing (530) the shroud (3) includes: reaching (532) an engagement and/or fit between the shroud (3)
and at least one lateral element (130) of the precursor (310, 311, 330 ,331); and/or
reaching (534, 534b) an abutment of the shroud (3) to the precursor (310, 311, 330 ,331).

16. The method of any of claims 10 to 15, wherein the floor (8) has the acoustic sensor (6) pre-mounted.

## Patentansprüche

1. Ein photoakustisch empfindliches Modul (100, 101, 102, 103), das folgende Merkmale aufweist:
eine Abdichtstruktur (110), die eine abgedichtete Umgebung (112) einschließt, wobei die abgedichtete Umgebung (112) ein Referenzgas enthält, wobei die Abdichtstruktur (110) ein Fenster (120) umfasst, das so angeordnet ist, dass einfallendes Licht in die abgedichtete Umgebung (112) eintreten kann, wobei die Abdichtstruktur (110) einen Boden (8) umfasst;
einen akustischen Sensor (6), der in der abgedichteten Umgebung (112) angeordnet ist, zum Erfassen von akustischen Wellen, die durch Interaktion von einfallendem Licht mit dem Referenzgas verursacht werden; und
eine Ummantelung (3), die in der abgedichteten Umgebung (112) angeordnet und zwischen dem Fenster (120) und dem akustischen Sensor (6) angeordnet ist, um den akustischen Sensor (6) vor einfallendem Licht abzuschirmen, das durch das Fenster (120) hindurchgeht,
wobei die Ummantelung (3) zumindest einen Spalt (5) präsentiert, der dahin gehend angeordnet ist, den Durchgang des Referenzgases zu ermöglichen,
wobei die Ummantelung (3) in der abgedichteten Umgebung (112) angeordnet ist, um die abgedichtete Umgebung (112) in eine erhellte Kammer (112a), die einfallendem Licht ausgesetzt ist, das durch das Fenster (120) hindurchgeht, und eine verdunkelte Kammer (112b) zu unterteilen, die den akustischen Sensor (6) enthält,
wobei die Ummantelung (3) in einen Boden (8) der Abdichtstruktur (110) eingepasst und/oder an demselben angebracht ist, **dadurch gekennzeichnet,**
**dass** die Ummantelung (3) seitlich gefaltet ist, um zumindest einen gefalteten Abschnitt (7) zu präsentieren, wobei der zumindest eine gefaltete Abschnitt (7) an den Boden (8) anstößt, wobei die Ummantelung (3) so geformt ist, dass dieselbe den zumindest einen Spalt (5) definiert,
wobei der akustische Sensor (6) an dem Boden (8) angebracht ist.

2. Das photoakustisch empfindliche Modul gemäß Anspruch 1, wobei die Ummantelung (3) in eine seitliche Wand (130) der Abdichtstruktur (110) eingepasst und/oder an derselben angebracht ist.

3. Das photoakustisch empfindliche Modul gemäß Anspruch 1 oder 2, das gemäß einer Transistorabmessungskonfiguration, TO-Konfiguration, konfiguriert ist.

4. Das photoakustisch empfindliche Modul gemäß einem der vorhergehenden Ansprüche, das gefaltete Abschnitte (7) umfasst, die dazu tendieren, sich auszudehnen und zu ihrer ursprünglichen Form zurückzukehren und eine Kraft auszuüben, die auf die seitliche Wand (130) einwirkt.

5. Das photoakustisch empfindliche Modul gemäß einem der vorhergehenden Ansprüche, wobei der akustische Sensor (6) an einer Position angeordnet ist, für die ein Kegel mit Scheitelpunkt in der Membran und der entlang eines Innenrands (1a) einer Außenabdeckung (1) verläuft, auf keinen des zumindest einen Spalts (5) trifft.

6. Das photoakustisch empfindliche Modul gemäß einem der vorhergehenden Ansprüche, wobei der akustische Sensor (6) in einer Position ist, die in diametraler Richtung weiter entfernt zu der seitlichen Wand (130) ist als die Erweiterung des zumindest einen Spalts (5).

7. Das photoakustisch empfindliche Modul gemäß einem der vorhergehenden Ansprüche, wobei der akustische Sensor (6) so platziert ist, dass der Vorsprung desselben in der Richtung des Fensters (2) auf die Ummantelung (3) trifft und nicht auf den zumindest einen Spalt (5) trifft.

8. Das photoakustisch empfindliche Modul gemäß einem der vorhergehenden Ansprüche, wobei die Ummantelung (3) durch eine Schulter (4) gehalten wird, die in einer seitlichen Wand (130) der Abdichtstruktur (110) definiert ist.

9. Das photoakustisch empfindliche Modul gemäß einem der vorhergehenden Ansprüche, wobei die Ummantelung (3) aus einem metallischen Material hergestellt ist.

10. Ein Verfahren (500a, 500b, 500c, 500d) zum Zusammenbauen eines photoakustisch empfindlichen Moduls (100, 101, 102, 103), wobei das Verfahren folgende Schritte aufweist:
Bereitstellen eines Bodens (8) einer Abdichtstruktur (110) mit einem daran angebrachten akustischen Sensor (6),
Bereitstellen (520) eines Vorläufers (310, 311, 320, 330, 331) einer Abdichtstruktur (110), wobei der Vorläufer (310, 311, 320, 330, 331) Folgendes umfasst:
den Boden (8) der Abdichtstruktur (110) und optional zumindest ein seitliches Element (130) der Abdichtstruktur (110) oder
zumindest ein seitliches Element (130) der Abdichtstruktur (110) und ein Fenster (120), das an dem zumindest einen seitlichen Element (130) vorab angebracht ist,
Bereitstellen (530) einer Ummantelung (3) für den Vorläufer (310, 311, 320, 330, 331) und Schließen (530) des Vorläufers (310, 311, 320, 330, 331), um die Abdichtstruktur (110) zu erhalten,
wobei die Ummantelung (3) so bereitgestellt ist, dass die Abdichtstruktur (110) zumindest einen Teil (120) aufweist, der den Durchgang von Licht von einer Außenumgebung (430) ermöglicht, die Ummantelung (3) jedoch den akustischen Sensor (6) verdunkelt,
wobei die Ummantelung (3) mit zumindest einem Spalt (5) seitlich ausgeschnitten ist (512), um eine Fluidkommunikation durch die Ummantelung (3) hindurch zu ermöglichen, und
ferner ein Falten (514) der Ummantelung (3), um zumindest einen gefalteten Abschnitt (7) zu erhalten, so dass der gefaltete Abschnitt (7) haftungsmäßig mit dem Boden (8) der Abdichtstruktur (110) mit dem daran angebrachten akustischen Sensor verbunden ist.

11. Das Verfahren gemäß Anspruch 10, wobei der Vorläufer (310, 311) von dem Typ ist, der das zumindest eine seitliche Element (130) und das vorab angebrachte Fenster (120) umfasst,
wobei das Bereitstellen (530) der Ummantelung (3) eine Einpassung (532) und/oder Eingriffnahme der Ummantelung (3) mit dem zumindest einen seitlichen Element (130) durch eine Übermaßpassung umfasst.

12. Das Verfahren gemäß Anspruch 10, wobei der Vorläufer (320) von dem Typ ist, der den Boden (8) umfasst,
wobei das Bereitstellen (530) der Ummantelung (3) ein Aufbringen (542) von Klebstoff oder Schweißmaterial (920) auf den Vorläufer (320), um die Ummantelung (3) in Entsprechung zu dem Klebstoff oder Schweißmaterial (920) an dem Vorläufer (320) anzubringen, und ein nachfolgendes Bereitstellen (546) einer eng ausgeführten Einpassung der Ummantelung (3) und der seitlichen Wand (130) der Abdichtstruktur (110) umfasst.

13. Das Verfahren gemäß einem der Ansprüche 10 bis 12, wobei zumindest ein seitliches Element (130) der Abdichtstruktur (110) dahin gehend geformt ist, dass dasselbe eine Stufe (4) aufweist, so dass die Ummantelung (3) durch die Stufe (4) in Eingriff genommen wird (532).

14. Das Verfahren gemäß einem der Ansprüche 10 bis 13, wobei das Falten Folgendes aufweist:
Falten (514) der Ummantelung (3), um den zumindest einen gefalteten Abschnitt (7) zu erhalten, so dass der gefaltete Abschnitt (7) in zumindest ein seitliches Element (130) des Vorläufers (310, 311, 320, 330, 331) eingepasst wird und/oder dasselbe in Eingriff nimmt (532) und/oder durch eine Schulter (4) gehalten wird, die in dem zumindest einen Element (4, 8) des Vorläufers (310, 311, 320, 330, 331) definiert ist.

15. Das Verfahren gemäß einem der Ansprüche 10 bis 14,
wobei das Bereitstellen (530) der Ummantelung (3) Folgendes umfasst:
Erzielen (532) einer Eingriffnahme und/oder Einpassung zwischen der Ummantelung (3) und zumindest einem seitlichen Element (130) des Vorläufers (310, 311, 330, 331); und/oder
Erzielen (534, 534b) eines Anstoßens der Ummantelung (3) an dem Vorläufer (310, 311, 330, 331).

16. Das Verfahren gemäß einem der Ansprüche 10 bis 15, wobei der Boden (8) den vorab daran angebrachten akustischen Sensor (6) aufweist.

## Revendications

1. Module (100, 101, 102, 103) photoacoustique sensible comprenant :
une structure (110) assurant l'étanchéité, enfermant une ambiance (112) scellée, l'ambiance (112) scellée contenant un gaz de référence, la structure (110) assurant l'étanchéité ayant une fenêtre (120) disposée de manière à ce que de la lumière incidente puisse entrer dans l'ambiance (112) scellée, la structure (110) assurant l'étanchéité ayant un plancher (8);
un capteur (6) acoustique, disposé dans l'ambiance (112) scellée, pour détecter des ondes acoustiques provoquées par une interaction de la lumière incidente avec le gaz de référence; et
une enveloppe (3) disposée dans l'ambiance (112) scellée et interposée entre la fenêtre (120) et le capteur (6) acoustique pour empêcher de la lumière incidente passant par la fenêtre (120) d'atteindre le capteur (6) acoustique,
dans lequel l'enveloppe (3) présente au moins un intervalle (5) disposé pour permettre le passage du gaz de référence,
dans lequel l'enveloppe (3) est disposée dans l'ambiance (112) scellée de manière à subdiviser l'ambiance (112) scellée entre une chambre (112a) éclairée soumise à de la lumière incidente passant par la fenêtre (120) et en une chambre (112b) obscurcie contenant le capteur (6) acoustique,
dans lequel l'enveloppe (3) est adaptée et/ou fixée à un plancher (8) de la structure (110) donnant l'étanchéité, **caractérisé par** :
l'enveloppe (3) est pliée latéralement pour présenter au moins une partie (7) pliée, la au moins une partie (7) pliée butant sur le plancher (8), l'enveloppe (3) étant conformée de manière à définir le au moins un intervalle (5),
dans lequel le capteur (6) acoustique est fixé au plancher (8) .

2. Module photoacoustique sensible suivant la revendication 1, dans lequel l'enveloppe (3) est adaptée et/ou fixée à une paroi (130) latérale de la structure (110) assurant l'étanchéité.

3. Module photoacoustique sensible suivant la revendication 1 ou 2, configuré suivant une configuration de sortie de transistor, TO.

4. Module photoacoustique sensible suivant l'une quelconque des revendications précédentes, ayant des parties (7) pliées, qui tendent à s'expanser et à revenir à leur forme d'origine et appliquent une force qui agit sur la paroi (130) latérale.

5. Module photoacoustique sensible suivant l'une quelconque des revendications précédentes, dans lequel le capteur (6) acoustique est déplacé à une position, où un cône, à sommet dans la membrane et passant le long d'un bord (la) intérieur d'une coiffe (1) extérieure, ne rencontre pas l'un quelconque d'au moins un intervalle (5).

6. Module photoacoustique sensible suivant l'une quelconque des revendications précédentes, dans lequel le capteur (6) acoustique est en une position, qui est plus distante de la paroi (130) latérale que l'extension du au moins un intervalle (5) dans une direction diamétrale.

7. Module photoacoustique sensible suivant l'une quelconque des revendications précédentes, dans lequel le capteur (6) acoustique est placé de manière à ce que sa projection dans la direction de la fenêtre (2) rencontre l'enveloppe (3) et ne rencontre pas le au moins un intervalle (5).

8. Module photoacoustique sensible suivant l'une quelconque des revendications précédentes, dans lequel l'enveloppe (3) est retenue par un épaulement (4) défini dans une paroi (130) latérale de la structure (110) assurant l'étanchéité.

9. Module photoacoustique sensible suivant l'une quelconque des revendications précédentes, dans lequel l'enveloppe (3) est en un matériau métallique.

10. Procédé (500a, 500b, 500c, 500d) d'assemblage d'un module (100, 101, 102, 103) photoacoustique sensible, procédé dans lequel :
on prévoit un plancher (8) d'une structure (110) assurant l'étanchéité avec un capteur (6) acoustique qui y est fixé,
on prévoit (520) un précurseur (310, 311, 320, 330, 331) d'une structure (110) assurant l'étanchéité, le précurseur (310, 311, 320, 330, 331) ayant :
le plancher (8) de la structure (110) assurant l'étanchéité et éventuellement
au moins un élément (130) latéral de la structure (110) assurant l'étanchéité ou au moins un élément (130) latéral de la structure (110) assurant l'étanchéité et une fenêtre (120) fixée à l'avance au au moins un élément (130) latéral,
on donne (530) une enveloppe (3) au précurseur (310, 311, 320, 330, 331) et on ferme (530 le précurseur (310, 311, 320, 330, 331) pour obtenir la structure (110) assurant l'étanchéité,
dans lequel l'enveloppe (3) est prévue de manière à ce que la structure (110) assurant l'étanchéité ait au moins une partie (120) qui permet le passage de lumière d'une ambiance (430) extérieure, mais l'enveloppe (3) obscurcit le capteur (6) acoustique,
dans lequel l'enveloppe (3) est découpée (512) latéralement par au moins un intervalle (5) pour permettre une communication fluidique à travers l'enveloppe (3), et
dans lequel en outre on plisse (514) l'enveloppe (3) pour obtenir au moins une partie (7) pliée, de manière à ce que la partie (7) pliée adhère au plancher (8) de la structure (10) assurant l'étanchéité ayant le capteur acoustique, qui y est fixé.

11. Procédé suivant la revendication 10, dans lequel le précurseur (310, 311) est du type ayant au moins un élément (130) latéral et la fenêtre (120) fixée à l'avance,
dans lequel prévoir (530) l'enveloppe (3) comprend adapter (532) et/ou enclencher l'enveloppe (3) sur le au moins un élément (130) latéral par un ajustement serré.

12. Procédé suivant la revendication 10, dans lequel le précurseur (320) est du type ayant le plancher (8),
dans lequel prévoir (530) l'enveloppe (3) comprend appliquer (542) de la colle ou du matériau (920) de soudage au précurseur (320) de manière à fixer l'enveloppe (3) au précurseur (320) conformément à la colle ou au matériau (920) de soudage et de manière à donner (546) ensuite un ajustement serré de l'enveloppe (3) et de la paroi (130) latérale de la structure (110) assurant l'étanchéité.

13. Procédé suivant l'une quelconque des revendications 10 à 12, dans lequel au moins l'élément (130) latéral de la structure (110) assurant l'étanchéité est conformé de manière à avoir un échelon (4), de manière à ce que l'enveloppe (3) soit enclenchée par l'échelon (4).

14. Procédé suivant l'une quelconque des revendications 10 à 13, dans lequel plier comprend :
plier (514) l'enveloppe (3) pour obtenir la au moins une partie (7) pliée, de manière à ce que la partie (7) pliée s'adapte et/ou s'enclenche (532) avec au moins un élément (130) latéral du précurseur (310, 311, 320, 330, 331) et/ou soit retenue par un épaulement (4) défini dans le au moins un élément (4, 8) du précurseur (310, 311, 320, 330, 331).

15. Procédé suivant l'une quelconque des revendications 10 à 14, dans lequel prévoir (530) l'enveloppe comprend
atteindre (532) un enclenchement et/ou une adaptation entre l'enveloppe (3) et au moins un élément (130) latéral du précurseur (310, 311, 320, 330, 331) ; et/ou
atteindre (534, 534b) une butée de l'enveloppe (3) sur le précurseur (310, 311, 320, 330, 331).

16. Procédé suivant l'une quelconque des revendication 10 à 15, dans lequel le capteur (6) acoustique est monté à l'avance sur le plancher (8).
